# EUROPEAN PATENT APPLICATION

(11) **EP 4 776 569 A1**
(43) Date of publication of application: **15.07.2026**
(21) Application number: 25151776.9
(22) Date of filing: 14.01.2025
(51) Int. Cl.: H04L 9/40, H04W 12/088

(54) **RADIO ACCESS NETWORK FIREWALL ON APPLICATION LEVEL**

(71) Applicant: Deutsche Telekom AG, 53113 Bonn (DE)
(72) Inventor: MÜLLER, Ludwig Matthias, 51766 Engelskirchen (DE); FRANZ, Christian Alexander, 53125 Bonn (DE); LÜPKE, Carl Fabian, 10551 Berlin (DE); SCHOLL, Bernhard, 52074 Aachen (DE); KALUZA, Jens, 53117 Bonn (DE)
(74) Representative: karo IP

(57) **Abstract**

Method and System for managing distributed entities (2) within an IP network, comprising, at an Application Layer Gateway (4):
- intercepting IP network traffic used to steer and manage the distributed entities (2),
- extracting steering and management commands from the intercepted IP network traffic,
- analyzing the extracted commands to evaluate their compliance with predefined security rules, wherein a security control instance implemented within the Application Layer Gateway (4) is configured remotely to define and update the predefined security rules; and
- forwarding only those steering and management commands that meet the predefined security rules to an application associated with a distributed entity (2),
wherein the Application Layer Gateway operates at the application layer to analyze the protocol and semantics of the intercepted traffic.

## Description

The invention relates to a method and a system for managing distributed entities within an IP network, comprising, at an Application Layer Gateway.

In modern IP-based networks, the management of a large number of distributed entities presents a significant challenge, particularly when these entities operate in environments where their trustworthiness cannot be guaranteed. Such distributed entities are devices, systems, or components that are spread across different locations but work together as part of a larger networked system. Examples of distributed entities include radio nodes in mobile networks which provide wireless communication services and are managed remotely by central systems. Other examples include Internet of Things (IoT) devices, such as smart meters or industrial sensors, which collect data and execute commands from centralized control systems, as well as edge computing nodes, which process data near its source in applications like video streaming or autonomous systems. Distributed entities may also take the form of content delivery nodes that cache and distribute data, such as video streams, across geographically dispersed locations.

To coordinate and manage these entities, centralized systems known as element managers are used. An element manager serves as the "brain" of the network and is responsible for controlling and monitoring the distributed entities. It sends instructions to configure operational parameters, such as setting transmission frequencies for radio nodes or adjusting power levels, and ensures that entities perform their intended tasks. Additionally, element managers collect performance data from the entities, allowing network operators to monitor their status, detect errors, and identify issues through Fault Management (FM). They also maintain an up-to-date record of all distributed entities, including their configurations, software versions, and physical or virtual locations, through Inventory Management (IM). Furthermore, element managers provide Trace Management (TM) capabilities, enabling detailed tracking and analysis of network events and interactions to diagnose and resolve issues effectively. These functions, combined with their ability to remotely update software and firmware, play a critical role in conducting diagnostics and ensuring overall network stability.

Despite these capabilities, the management system and the distributed entities are often provided by vendors as closed, proprietary systems, commonly referred to as "black boxes." This means their internal workings, including software, protocols, and security measures, are not accessible or transparent to the network operator. As a result, the operator has limited visibility into how these systems process commands or ensure security. This lack of transparency introduces a significant challenge, particularly in environments where the vendor's trust level is uncertain. Without the ability to inspect or influence the internal mechanisms of these black boxes, ensuring the security and proper functioning of the network becomes a critical concern, which the inventive system addresses effectively.

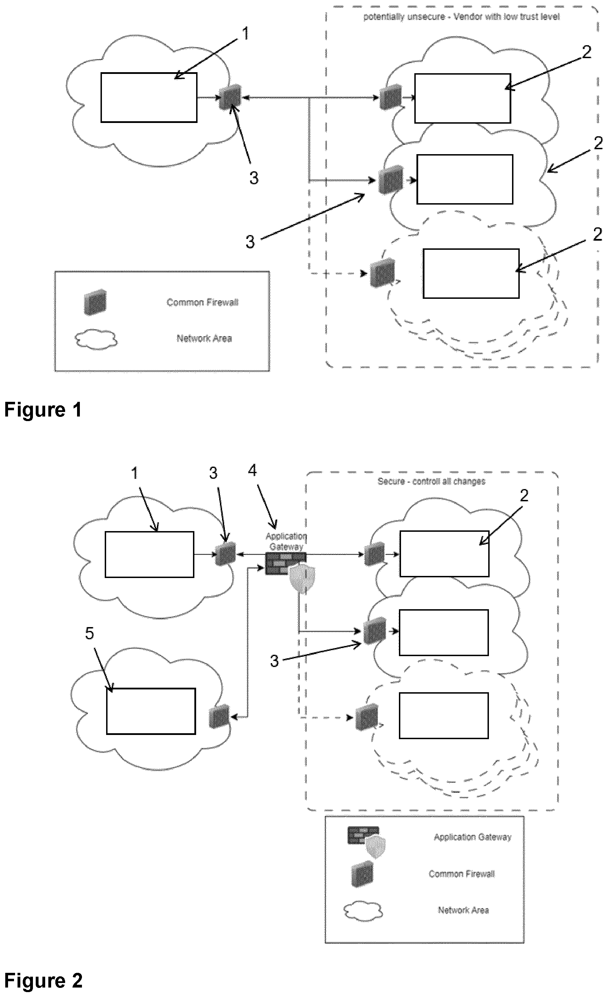

This lack of transparency is compounded by the fact that communication between the element manager and its associated distributed entities typically occurs over IP-based networks, utilizing secure protocols such as Transport Layer Security (TLS). These protocols encrypt data to protect it from unauthorized access or manipulation. However, in many cases, distributed entities are sourced from vendors with uncertain trust levels, creating significant security risks. As shown in Figure 1, this communication often passes through a common firewall, which provides only basic network protection based on source IP, destination IP, and TCP port. While this firewall may shield the network from certain external threats, it lacks the capability to analyse and control the commands exchanged between the element manager and the distributed entities. This limitation is especially problematic in scenarios involving untrusted vendors, where malicious or unauthorized commands could disrupt operations or compromise the network's overall security.

State of the art solutions, such as traditional Application Layer Gateways (ALGs), attempt to address some of these issues but fall short in critical areas. These systems are primarily designed to filter traffic at the packet or protocol level and cannot evaluate the specific content or intent of commands. Furthermore, their reliance on fixed, static security policies makes them ill-suited for dynamic environments, where conditions and threats are constantly evolving. Traditional ALGs and firewalls also introduce communication disruptions, as their operation often interferes with the seamless exchange of information between element managers and distributed entities. Moreover, they lack the ability to monitor the behaviour of distributed entities, which makes it difficult to detect anomalies or unauthorized activities that could indicate security breaches.

These limitations highlight the need for an advanced solution that secures communication between element managers and distributed entities by enabling real-time analysis and control of commands.

The object of the invention is to provide such a solution, ensuring that only legitimate instructions are executed while maintaining security, operational transparency, and the stability and performance of the network.

This object is solved by the method of claim 1, the system of claim 12, and the Application Layer Gateway (ALG) of claim 13. Advantageous embodiments and further refinements of the invention are described in the dependent subclaims.

From the main claims one can get that the invention introduces an advanced Application Layer Gateway (ALG) designed to manage and secure distributed entities within IP networks, particularly in environments where their trustworthiness is uncertain. The inventive ALG operates by intercepting IP network traffic used to steer and manage the distributed entities. This traffic, often originating from centralized control systems such as element managers, contains critical steering and management commands. These commands are extracted from the intercepted traffic and subjected to a detailed analysis at the application layer, where the protocol and semantics of the traffic are understood. The analysis is governed by a security control instance implemented within the Application Layer Gateway, which evaluates the commands' compliance with predefined security rules. Commands that meet these security rules are then forwarded to an application associated with the distributed entity, ensuring only legitimate instructions are executed while safeguarding the system from harmful or unauthorized commands.

In addition to traffic interception and analysis, the invention ensures that the security control instance can be configured remotely to define and update the predefined security rules dynamically. This remote configurability allows network operators to adapt the security policies as threats evolve or operational requirements change, making the system highly flexible and robust. Moreover, the inventive ALG logs the filtered and analysed traffic, forwarding these logs to a centralized control unit for secure storage and further analysis. This capability enables continuous monitoring of the behaviour of distributed entities, providing valuable insights into their operations and allowing for the detection of anomalies that may indicate security risks.

To ensure seamless integration with existing systems, the inventive ALG is designed to meet two essential requirements. Firstly, it operates transparently, ensuring that neither the control system nor the distributed entities are aware of the interception process. This transparency prevents disruptions in communication and eliminates the need for modifications to the existing infrastructure. Secondly, the ALG is implemented in a manner that ensures the performance of the associated applications is not impacted. By working at the application layer and performing real-time traffic analysis, the invention achieves a balance between security, transparency, and operational efficiency. This combination of interception, command extraction and analysis, dynamic filtering, and logging ensures enhanced security for distributed entities, precise control over their behaviour, and protection against harmful or unauthorized commands, all while maintaining the stability and functionality of the network.

It is advantageous to include a mechanism for remotely monitoring the behaviour of the security control instance within the Application Layer Gateway. Such monitoring provides network operators with real-time insights into the performance and activity of the security control instance, ensuring that its operation aligns with intended security policies. By observing how the control instance processes and evaluates commands, operators can identify inefficiencies or emerging threats and take corrective action.

Furthermore, this monitoring capability supports dynamic adaptation of the security control instance's configuration. Continuous observation allows operators to adjust predefined security rules in response to changing network conditions, newly identified vulnerabilities, or evolving operational requirements. This adaptability makes the system highly robust and responsive to complex environments.

Building on this, the system's ability to store and analyse traffic logs further enhances its monitoring capabilities.

Another advantageous feature is the logging module integrated into the Application Layer Gateway. This module captures and records the traffic it processes, including analysed and filtered commands, and transmits the logs to a centralized control unit for secure storage and detailed analysis. By maintaining a comprehensive record of interactions between element managers and distributed entities, the system supports effective auditing and forensic investigations.

The centralized logging mechanism also provides valuable insights into network behaviour over time. This enhances the ability to optimize security rules, detect anomalies, and strengthen the overall security posture of the network. To extend its effectiveness further, the ALG can intercept and analyse encrypted traffic.

It is particularly advantageous that the invention supports certificate-based mechanisms for traffic interception, enabling the decryption of secured communications, such as those protected by Transport Layer Security (TLS). In this approach, the network operator issues the certificates used by the element manager and the distributed entities. This enables the Application Layer Gateway to intercept and decrypt the TLS-encrypted traffic, effectively breaking the secure connection while maintaining the ability to inspect and filter the communication. The ALG seamlessly integrates into the communication path without disrupting the existing encryption framework, ensuring that secure traffic can be analyzed and controlled without compromising its integrity.

This feature ensures that even highly secure communications are subject to thorough analysis and filtering, maintaining the integrity of encryption protocols while applying robust security policies. With this foundation, the system can implement protocol-specific filtering to refine traffic management further.

Another advantageous feature of the invention is the use of a protocol-specific ruleset for evaluating commands. The security control instance within the Application Layer Gateway applies these tailored rulesets, enabling precise control over traffic based on the specific communication protocols used. The rulesets are dynamically adjustable to address changing network conditions or operational requirements, providing the flexibility necessary for managing diverse network environments.

The adaptability of the ruleset strengthens the ALG's capacity to handle protocol-specific threats effectively. If a command is blocked, the system ensures compatibility by emulating appropriate error responses.

It is also advantageous if the Application Layer Gateway can emulate error codes when commands fail to meet the predefined security rules. By generating error codes recognizable to the element manager, the system ensures compatibility with existing control systems and prevents disruptions caused by rejected commands.

This feature ensures smooth interaction between the element manager and the distributed entities, even when security rules necessitate the rejection of certain commands. To further minimize disruptions, the ALG can selectively block, modify, or replace problematic commands.

The invention also allows for selective blocking, modification, or replacement of commands that do not comply with predefined security rules. Blocking prevents harmful commands from reaching distributed entities, while modification or replacement aligns commands with security policies without outright rejection.

This nuanced approach minimizes disruptions to the network while ensuring that security standards are maintained. By supporting multiple handling options for problematic commands, the ALG offers both flexibility and control. In addition to these measures, the system includes capabilities for detecting unauthorized behaviours based on traffic patterns.

An additional advantageous feature is the system's ability to perform behavioural detection and blocking. This involves analysing traffic patterns and command behaviours to detect anomalies or unauthorized activities that could compromise the stability or security of the distributed entities.

The primary advantage of this feature is its proactive protection against emerging or previously unidentified threats. By recognizing and responding to behavioural anomalies, the ALG provides an additional layer of security. To ensure continuous adaptability, the system dynamically updates its rules based on real-time metrics.

It is particularly useful that the invention allows for real-time service-interruption free updates to security rules based on traffic metrics and patterns detected by the centralized control unit. This capability ensures the system can respond quickly to changing network conditions, such as increased traffic loads or unusual behaviours, without compromising performance. By dynamically adjusting the ruleset, the ALG maintains optimal security and operational efficiency, even in demanding environments. In case of significant security events, the system can alert operators through timely notifications.

To ensure swift intervention, the inventive method or system may include a feature for generating alarms or notifications whenever commands are blocked by the Application Layer Gateway. These alarms are sent to the centralized control unit, providing immediate awareness of potential security issues. This feature enhances the system's responsiveness by enabling operators to take corrective action quickly, minimizing the impact of blocked commands on network operations. For scenarios requiring temporary flexibility, the system also supports the use of whitelists.

Finally, the inclusion of a temporary whitelist mechanism is highly advantageous. This feature allows specific operations to bypass filtering for a limited duration, ensuring that critical tasks or maintenance activities can be executed without delay. The whitelist is configurable by operators through the centralized control unit, providing controlled flexibility. The temporary whitelist enables the system to balance security and functionality, particularly during emergency or maintenance scenarios, ensuring that essential operations proceed without compromising the network's overall integrity.

Following the invention is described on the basis of the figures:
- **Figure 1**: a state of the art system including element managers and entities and
- **Figure 2**: controlling critical applications through traffic filtering

Figure 1 illustrates a conventional setup for managing distributed entities within an IP-based network using element managers 1. In this architecture, the element manager 1 is a centralized control system responsible for overseeing the operation and configuration of multiple distributed entities 2, such as managed nodes, devices, or systems. These entities 2 are connected to the element manager 1 over a secure IP network, and communication between them typically traverses a common firewall 3 that protects the broader network area.

The element manager 1 sends commands to the distributed entities 2 for purposes such as configuring operational parameters, performing diagnostics, or initiating specific actions. These commands, which travel through the network, form the backbone of the system's ability to manage the entities effectively. Distributed entities 2, in turn, respond with status updates or the results of requested actions, allowing the element manager to monitor their behavior and ensure proper functioning. This bidirectional communication is essential for maintaining control over a large number of distributed entities.

However, in cases where distributed entities 2 are provided by vendors with low or uncertain trust levels, the state-of-the-art system faces significant security challenges. These entities may introduce vulnerabilities due to their origin, making it difficult to guarantee their integrity or adherence to security policies. As shown in Figure 1, the distributed entities 2 are deployed in separate, potentially unsecure network areas, adding another layer of complexity to the system's ability to maintain control and security.

While the common firewall 3 provides basic protection by filtering network traffic at a high level, it does not analyze the specific commands being sent between the element manager 1 and the distributed entities 2. This limitation leaves the system vulnerable to malicious or unauthorized commands that could disrupt operations or compromise the stability of the network. Additionally, the firewall 3 lacks the capability to log or analyze the detailed behavior of the distributed entities 2, making it challenging to detect anomalies or enforce granular security policies.

In summary, the state-of-the-art system depicted in Figure 1 relies heavily on the element manager's 1 centralized control but lacks advanced mechanisms to ensure the trustworthiness of distributed entities 2, particularly in scenarios involving low-trust vendors. This highlights the need for an enhanced solution, such as the proposed Application Layer Gateway, which provides deeper control, monitoring, and security for distributed entities 2 within IP networks.

Figure 2 depicts the inventive system that incorporates an Application Layer Gateway 4 (ALG) to address the limitations of the state-of-the-art system shown in Figure 1. The ALG 4 is introduced as an intermediary device between the element manager 1 and the distributed entities 2, providing enhanced control, security, and monitoring capabilities for the network.

In this system, the element manager 1 continues to serve as the central control unit, sending commands to distributed entities 2 to steer and manage their operations. However, unlike the state-of-the-art setup, these commands must now pass through the Application Layer Gateway 4 before reaching the distributed entities 2. The ALG intercepts the network traffic between the element manager and the distributed entities, extracting and analyzing all steering and management commands. This analysis ensures that the commands comply with predefined security rules enforced by a security control instance within the ALG 4. Only commands that meet these security criteria are forwarded to the distributed entities, thereby safeguarding the network against unauthorized or harmful instructions.

A key feature of the inventive system is the inclusion of a control unit 5 for the Application Layer Gateway 4. This control unit 5 allows for the remote configuration and management of the security control instance within the ALG 4. It provides operators with the ability to define and update security rules dynamically, enabling the system to adapt to evolving threats and operational requirements. Furthermore, the control unit also collects and analyzes logs generated by the ALG 4, offering insights into the traffic and command patterns observed within the network.

The inventive system also enhances the overall security of the network by introducing logging and monitoring capabilities. The ALG 4 records the traffic it processes, including the commands it evaluates and filters. These logs are forwarded to the control unit for secure storage and further analysis, enabling operators to monitor the behavior of the distributed entities and detect anomalies or unauthorized activity in real-time.

Another distinguishing feature of the inventive system is its transparent operation. The ALG 4 ensures that neither the element manager 1 nor the distributed entities 3 are aware of the interception process, preserving the seamless communication flow required for network stability. Additionally, the system is designed to maintain the performance of the applications associated with the distributed entities, ensuring that the additional layer of security does not compromise operational efficiency.

By incorporating the Application Layer Gateway 4, the inventive system overcomes the limitations of the state-of-the-art system, providing granular traffic filtering, dynamic adaptability, and real-time monitoring. These advancements make it particularly well-suited for environments where distributed entities are sourced from untrusted vendors, ensuring both control and security without requiring modifications to existing infrastructure.

## Claims

1. Method for managing distributed entities (2) within an IP network, comprising, at an Application Layer Gateway (4):
- intercepting IP network traffic used to steer and manage the distributed entities (2),
- extracting steering and management commands from the intercepted IP network traffic,
- analyzing the extracted commands to evaluate their compliance with predefined security rules, wherein a security control instance implemented within the Application Layer Gateway (4) is configured remotely to define and update the predefined security rules; and
- forwarding only those steering and management commands that meet the predefined security rules to an application associated with a distributed entity (2),
wherein the Application Layer Gateway operates at the application layer to analyze the protocol and semantics of the intercepted traffic.

2. The method according to claim 1,
further comprising remotely monitoring the behaviour of the security control instance to enable surveillance and dynamic adaptation of its configuration.

3. The method according to claims 1 or 2,
further comprising logging the extracted and analyzed commands, wherein the logged data is forwarded to a centralized control unit for secure storage and analysis.

4. The method according to one of the proceeding claims,
wherein the interception of the IP network traffic is facilitated by a certificate-based mechanism that enables decryption of encrypted traffic, including traffic encrypted using Transport Layer Security (TLS).

5. The method according to one of the proceeding claims,
wherein the Application Layer Gateway applies a protocol-specific ruleset for evaluating the compliance of the extracted commands, and the ruleset is dynamically adjustable based on network conditions or operational requirements.

6. The method according to one of the proceeding claims,
further comprising emulating error codes at the Application Layer Gateway in response to commands that do not meet the predefined security rules, thereby ensuring compatibility with the control system.

7. The method according to one of the proceeding claims,
wherein commands that do not meet the predefined security rules are selectively blocked, modified, or replaced with predefined responses to prevent disruption to the distributed entity's functionality.

8. The method according to one of the proceeding claims,
wherein the Application Layer Gateway detects and blocks malicious or unauthorized commands based on behavioral patterns of the commands, including deviations from predefined behavioral baselines or detected anomalies.

9. The method according to one of the proceeding claims,
wherein the remote configuration of the security control instance includes updating the predefined security rules based on real-time analysis of traffic metrics and patterns detected by the centralized control unit.

10. The method according to one of the proceeding claims,
further comprising generating alarms or notifications at the centralized control unit when commands are blocked by the Application Layer Gateway, to enable timely intervention by an operator.

11. The method according to one of the proceeding claims,
wherein the Application Layer Gateway maintains a temporary whitelist of commands to allow specific operations for a limited duration, the whitelist being configurable by an operator through the centralized control unit.

12. A system for managing distributed entities (2) within an IP network by an event manager (1), comprising:
an Application Layer Gateway (4) configured to
- intercept IP network traffic used to steer and manage the distributed entities (2),
- extract steering and management commands from the intercepted IP network traffic,
- analyze the extracted commands to evaluate their compliance with predefined security rules, wherein a security control instance is implemented within the Application Layer Gateway (4) to perform the analysis; and
- forward only those steering and management commands that meet the predefined security rules to an application associated with a distributed entity,
a remote configuration module (5) operatively connected to the Application Layer Gateway, configured to define and update the predefined security rules of the security control instance,
wherein the Application Layer Gateway (4) operates at the application layer to parse and analyze the protocol and semantics of the intercepted traffic.

13. An Application Layer Gateway (4) for managing distributed entities (2) within an IP network, comprising:
a traffic interception module configured to intercept IP network traffic used to steer and manage distributed entities,
a command extraction module configured to extract steering and management commands from the intercepted network traffic,
a security control instance configured to:
- analyze the extracted commands to evaluate their compliance with predefined security rules, and
- forward only those commands that meet the predefined security rules to an application associated with a distributed entity,
a remote configuration interface configured to receive updates to the predefined security rules and dynamically adjust the behavior of the security control instance, wherein the Application Layer Gateway operates at the application layer to parse and analyze the protocol and semantics of the intercepted traffic.
